# EUROPÄISCHE PATENTSCHRIFT

(11) **EP 0 693 101 B1**
(45) Veröffentlichungstag und Bekanntmachung des Hinweises auf die Patenterteilung: **30.07.1997**
(21) Anmeldenummer: 94913112.2
(22) Anmeldetag: 02.04.1994
(51) Int. Cl.: C09K 21/14, C09K 21/02

(54) **BRANDSCHUTZMITTEL**
FIREPROOFING AGENT
MATERIAU IGNIFUGE

(30) Priorität: 09.04.1993 DE 4311794
(43) Veröffentlichungstag der Anmeldung: 24.01.1996
(73) Patentinhaber: Chemische Fabrik Grünau GmbH, D-89251 Illertissen (DE)
(72) Erfinder: ANNEMAIER, Dieter, D-89171 Illerkirchberg (DE); GRAF, Robert, D-89281 Altenstadt (DE)
(74) Vertreter: Wilk, Hans-Christof, Dr.
(86) Internationale Anmeldenummer: EP9401032
(87) Internationale Veröffentlichungsnummer: WO9424226

(56) Entgegenhaltungen:
- EP-A- 0 293 531
- EP-A- 0 347 309
- DE-A- 4 007 060
- US-A- 4 191 675
- US-A- 4 225 649
- US-A- 4 273 879

## Beschreibung

Die Erfindung betrifft ein Brandschutzmaterial in loser Mischung, insbesondere in einem verschlossenen, flexiblen Beutel, enthaltend
a. mindestens ein bei Temperaturen bis 1100 °C wärmebeständiges, wärmeisolierendes Material,
b. mindestens ein bei erhöhten Temperaturen wärmewirksames Quellmittel
c. mindestens ein bei erhöhten Temperaturen wärmewirksames Bindemittel.

Ein derartiges Brandschutzmaterial ist in der DE-A1-35 36 625 des Anmelders beschrieben und besitzt gute Wärmedämmungs- und Expansionseigenschaften.

Das aus dieser Druckschrift bekannte Brandschutzmaterial enthält normal einen sehr hohen Anteil an anorganischen Fasern, wie Keramikfaser und Mineralfaser. Derartige Fasern sind aufgrund der möglichen kanzerogenen Eigenschaften nicht mehr erwünscht, selbst dann, wenn das Brandschutzmaterial in einem Beutel eingeschlossen ist. Versuche, den Faseranteil zu reduzieren und stattdessen höhere Mengen an anderen Isolierstoffen einzusetzen, zeigten aber gewisse Nachteile auf, wie verstärkte Rieselneigung und schlechte Rauchgasdichtigkeit.

Der Erfindung liegt deshalb die Aufgabe zugrunde, die potentielle Gefahr von anorganischen, insbesondere mineralischen Fasern zu vermeiden und trotzdem gute Brandschutzeigenschaften zu erhalten.

Die Erfindung ist dadurch gekennzeichnet, daß das Brandschutzmaterial frei von anorganischen Fasern ist und mindestens einen flexibel nachgiebigen Bestandteil enthält.

Der hohe Faseranteil der bisher bekannten Brandschutzmaterialien hat der Mischung der einzelnen Bestandteile eine gewisse innere Struktur verliehen, die im Brandfalle über im wesentlichen dem gesamten Temperaturbereich aufrechterhalten blieb und bei Temperaturen oberhalb des Sinter- und Schmelzbereichs des Fasermaterials durch die dann entwickelte Bindemitteleigenschaft dieser Materialien ersetzt wurde. Diese sehr erwünschten Eigenschaften der Fasern sind durch die Freiheit an anorganischem Fasermaterial weggefallen.

Es wurde gefunden, daß die Temperaturbeständigkeit des Fasermaterials zwar erwünscht, aber nicht notwendig ist. Aufgrund zahlreicher Brandversuche wurde gefunden, daß abgestimmte mechanische Eigenschaften der Mischung aus dem Brandschutzmaterial nicht nur deren Handhabung und Funktion unter Normaltemperaturen bestimmen, sondern auch das Verhalten der Mischung im Brandfalle günstig beeinflußt. So wurde gefunden, daß der mindestens eine flexibel nachgiebige Bestandteil in der Mischung geeignet ist, der Rieselneigung einzelner Bestandteile entgegenzuwirken, eine Entmischung zu verhindern, eine dichte Plazierung des Brandschutzmaterials, auch dann, wenn es sich in Säckchen befindet, zu ermöglichen und durch Schaffung verlängerter Strömungswege (Labyrinth-Prinzip) gleichzeitig die Rauchgasdichtigkeit des Brandschutzmaterials zu erzielen, auch dann, wenn bei niedrigen Temperaturen Bindemittel und Quellmittel noch nicht oder noch nicht ausreichend zur Wirkung kommen. Es wurde weiterhin gefunden, daß der flexibel nachgiebige Bestandteil nicht sonderlich temperaturbeständig zu sein braucht. Selbst dann, wenn im Brandfalle die flexibel nachgiebigen Bestandteile in ihrer Struktur zerstört werden, führt dies nicht zu einer Desintegration bzw. zu einem Zerfall der Brandschutzmischung. Dies ist darauf zurückzuführen, daß bei Temperaturen, denen das flexibel nachgiebige Material nicht mehr standhält, bereits Quellmittel und Bindemittel aktiv werden, und für einen Zusammenhalt der Mischung sorgen. Aufgrund der hohen wärmeisolierenden Wirkung des Brandschutzmaterials liegt bereits unmittelbar hinter der jeweiligen durch die Hitzeeinwirkung veränderten Schicht des Brandschutzmaterials die Mischung in unveränderter nativer oder nur teilweise veränderter Form vor, mit intakter Struktur, so daß die günstigen mechanischen Eigenschaften vollständig erhalten bleiben.

Das erfindungsgemäße Brandschutzmaterial besteht mit Vorteil ausschließlich aus witterungs- und feuchtigkeitsbeständigen Bestandteilen. Je nach Anwendungszweck kann es vorgesehen sein, daß nur ein Quellmittel oder nur ein Bindemittel enthalten ist. Bevorzugt sind jedoch Quellmittelmischungen und Bindemittelmischungen, da es bei solchen Mischungen möglich ist, das Wirksamwerden dieser Mittel in stetiger oder abgestufter Weise im wesentlichen gleichmäßig über den gesamten Temperaturbereich, der in einem Brandfalle auftritt, wirksam werden zu lassen. Das Quellmittel bzw. die Quellmittelmischung kann in Mengen von 20 bis 60 Gew.-%, insbesondere 25 bis 55 Gew.-% vorhanden sein. Die Quellwirkung beginnt vorzugsweise spätestens bei Temperaturen ab ca. 200°C, insbesondere ab ca. 150°C und erstreckt sich mit besonderem Vorteil auf Temperaturen bis zu 1100°C. Das Bindemittel kann in Mengen von 6 bis 25 Gew.-% vorliegen und liegt üblicherweise in Mengen von über 10, insbesondere 10 Gew.-% vor. Das Bindemittel wird mit Vorteil bei Temperaturen ab spätestens 200°C, insbesondere bei Temperaturen ab 100°C oder früher wirksam, wobei die Bindemitteleigenschaften vorteilhafterweise über den gesamten im Brandfalle vorkommenden Temperaturbereich wirksam sind, also mindestens bis 900°C, vorzugsweise bis 1100°C und darüber.

Überraschenderweise wurde gefunden, daß durch die Kombination einer sehr früh einsetzenden Quellwirkung mit einer noch früher einsetzenden Bindemittelwirkung in Verbindung mit dem zumindest bei normaler Umgebungstemperatur flexibel nachgiebigen Bestandteil, sowohl bei Normaltemperatur als auch im Brandfalle Eigenschaften in der Mischung erzeugt werden, die die an sich erwünschten Eigenschaften der Glas- und Mineralfasern kompensieren. Einer Rieselneigung des wärmeisolierenden Materials und eines groß Anteils des Quellmittels kann zusätzlich dadurch entgegengetreten werden, daß Bestandteile der Bindemittelmischung spätestens bei Temperaturen ab 200 °C, vorzugsweise ab 100°C ihre Wirkung erzielen und einen Verbund zwischen den rieselfähigen Bestandteilen schaffen. Eine bereits bei Temperaturen ab 200 °C, vorzugsweise ab 150°C anf angende Quellung sorgt für einen frühzeitigen Druckanstieg innerhalb des Brandschutzmaterials, das entweder in den Beuteln oder in einem anderen, räumlich begrenzten Behältnis, wie einem Schacht oder Kanal, gehalten ist. Dadurch wird der durch das Bindemittel erhaltene Verbund verstärkt, weil die einzelnen Bestandteile der Mischung gegeneinander gedrückt werden. Dies wird noch dadurch unterstützt, daß durch die flexibel nachgiebigen Bestandteile, die der Mischung Volumen und verminderte Gasdurchlässigkeit verleihen, frühzeitig ein Zusammenschluß zwischen den einzelnen Bestandteilen der Mischung erhalten wird, der die Mischung bereits schon bei Beginn des Quellvorganges dicht macht, insbesondere rauchdicht.

Der mindestens eine flexibel nachgiebige Bestandteil besteht vorzugsweise aus organischen Materialien, insbesondere biologischen Materialien. Diese zersetzen sich bei ansteigenden Temperaturen zwischen etwa 150°C und 400°C. In diesem Temperaturbereich haben jedoch die abgestuften Quellmittel eine derartig hohe Volumenvergrößerung erreicht, die den Volumenverlust durch Zersetzung der flexibel nachgiebigen Bestandteile überkompensiert, so daß dieser Verlust hingenommen werden kann. Die flexibel nachgiebigen Bestandteile sind Vorzugsweise komprimierbar. Sie liegen mit Vorteil in Form von Teilchen vor. Die flexibel nachgiebigen Bestandteile liegen vorzugsweise in körniger oder Granulatform vor, insbesondere mit unregelmäßiger insbesondere rauher Oberfläche. Diese unregelmäßige Oberflächengestaltung führt zu einer erhöhten inneren Reibung der Mischung, wodurch ihre Entmischungsneigung und ihre Rieselfähigkeit vermindert wird. Zugleich wird durch die Ausfüllung von Hohlräumen und die Gefahr von Rauchgasdurchtritten drastisch verringert. Vorzugsweise weisen die komprimierbaren Bestandteile eine offenporige Struktur auf, so daß sie mindestens einen Teil von feinteiligen, insbesondere pulverförmigen Bestandteilen in sich aufnehmen können. Die komprimierbaren Bestandteile bestehen mit Vorteil aus geschäumtem Material, insbesondere aus Schaumstoffen aus Kunststoffen. Sie können in einfacher Weise durch unregelmäßiges Zerkleinern größerer Schaumstoffstücke erhalten werden. Beispiele für geeignete Schäume sind solche aus Polyurethan, Polyethylen, Polypropylen und dergl. Die KorngröBe der komprimierbaren Bestandteile liegt vorzugsweise im Bereich von 0,5mm bis 10mm, insbesondere 2mm bis 8mm, wobei eine mittlere Größe in der Regel zwischen 3mm und 5mm von Vorteil ist.

Das elastisch komprimierbare Material kann auch aus Fasern bestehen, die nicht anorganischer Zusammensetzung sind. Hierzu eignen sich insbesondere Fasern biologischen Ursprungs, wie Zellulosefasern, da diese verhältnismäßig temperaturstabil sind. Die Fasern können aber auch aus organischen Materialien bestehen, bspw. Kunststoffasern sein und bei höherer Temperatur gleichzeitig Bindemitteleigenschaften entwickeln. Auch Mischungen verschiedenartiger Fasern sind möglich. Die Fasermaterialien liegen vorzugsweise in Form von Konglomeraten, Klumpen oder Knäueln insbesondere mit offener Oberfläche vor, ähnlich wie dies in der oben erwähnten DE-A1 35 36 625 beschrieben ist, jedoch mit dem wesentlichen Unterschied, daß sie aufgrund ihrer organischen Zusammensetzung bereits bei mäßig hohen Temperaturen schmelzen bzw. verbrennen und dadurch ihre erwünschten Eigenschaften verlieren. Durch die klebende, quellende und wärmeisolierende Wirkung der anderen Komponenten, ist diese Eigenschaft überraschenderweise selbst bis zu Mengen von 30 Gew.-% ohne Einfluß auf die Brandeigenschaften. Es können auch mehrere flexibel nachgiebige Bestandteile in Mischung vorliegen, bspw. in Form von Mischungen aus Schaumstoffgranulaten und Faserkonglomeraten.

Als wärmeisolierende Bestandteile können die bekannten wärmeisolierenden Materialien vorgesehen sein, unter Vermeidung von faserförmigem Material. Geeignete Materialien sind bspw. pulverförmige und körnige Isolatoren bzw. Dämmstoffe, wie geblähter Perlit, geblähter Blähton, Kieselgur, Bims, Flugasche, vorzugsweise in granulierter Form, Lava, Gasbeton, Ziegelsplit, Gips, gebrochene Calciumsilicatformstücke und Hohlkugeln aus Glas. Die Korngröße liegt in bekannten Bereichen von 0mm bis ca. 8mm. Geblähter Perlit ist einer der bevorzugten Isolierstoffe, aufgrund seiner hohen Temperaturbeständigkeit. Unter den Wärmeisolatoren sind die sogenannten Leichtfüllstoffe mit geringem spezifischem Gewicht bevorzugt. Der Anteil an wärmeisolierenden Bestandteilen liegt vorteilhafterweise bei 20 bis 50 Gew.-% insbesondere bei 25 bis 45 Gew.-%.

Eine Quellmittelmischung enthält mindestens zwei bei verschiedenen Temperaturstufen wirksame Quellmittel. Auch hier ist Perlit und zwar in ungeblähter Form als nativer Perlit bevorzugt. Blähgraphit ist ebenfalls ein bevorzugtes Blähmittel, da er sich bereits bei Temperaturen ab 200 °C ausdehnt. Auch ungeblähter Blähton, der in einem mittleren Bereich zwischen Blähgraphit und nativem Perlit aktiv ist, ist ein bevorzugtes Quellmittel. Zusätzlich zu oder anstelle von Blähgraphit können auch Blähmittel auf organischer Basis vorgesehen sein, wie sie allgemein bekannt sind. Hierzu gehören vor allem Harnstofformaldehydharze und Melaminformaldehydharze, die gleichzeitig Bindemitteleigenschaften haben. Auch Kombinationen von Ammoniumpolyphosphat/ Melaminphosphat/Pentaerythrit sind ein geeignetes Blähmittel. Dabei wird die Auswahl der Blähmittelmischung mit Vorteil so vorgenommen, daß im Brandfalle über den gesamten Temperaturbereich eine im wesentlichen stetige Quellwirkung erzielt wird.

Beim Brandschutzmaterial nach der DE-A1 35 36 625 liegen das wärmeisolierende Material und/oder das sich ausdehnende Material in sehr hohen Mengen von mehr als 90 Gew.-%, insbesondere mehr als 95 Gew.-% in der Mischung vor. Erfindungsgemäß wurde gefunden, daß gute Brandschutzeigenschaften auch mit einem geringeren Anteil an diesen beiden Materialien erzielt werden können. Erfindungsgemäß ist es deshalb vorge-sehen, den Gewichtsanteil an wärmeisolierendem Material und/oder sich ausdehnendem Material unter 90 Gew.-%, insbesondere unter 85 Gew.-% zu halten, wobei auch bei Mengen unter 80 % gute Ergebnisse erzielt werden. Dies kommt der besonderen Eigenschaft von Perlit entgegen, der zwar als wärmeisolierendes Material und als sich ausdehnendes Quellmittel aufgrund seiner hohen Temperaturbeständigkeit bevorzugt ist, andererseits aber eine unerwünscht starke Rieselneigung zeigt. Um der Rieselneigung des Brandschutzmaterials entgegenzuwirken, ist es erfindungsgemäß vorgesehen, den Anteil an Bindemitteln relativ hoch zu halten, wobei er vorzugsweise über 10 Gew.-%, vorzugsweise über 15 Gew.-% liegt. Dabei ist bei den relativen Gewichtsanteilen zu beachten, daß das wärmeisolierende Material, das vorzugsweise in Form von Leichtfüllstoffen vorliegt, ein geringes Schüttgewicht (50 bis 500 g. pro 1) besitzt. Relativ gering erscheinende Verschiebungen der Gewichtsanteile zugunsten der Bindemittel, deren Schüttgewichte in der Regel bei 300 bis 1000g pro l liegen, also wesentlich höher sind, haben deshalb relativ große Veränderungen hinsichtlich der Volumenverhältnisse zur Folge. Als Bindemittel können bekannte Bindemittel für Brandschutzmaterialien verwendet werden, wobei darauf geachtet wird, daß eine im Brandfalle über den gesamten Temperaturbereich von 100°C bis über 800°C aktive Bindemittelwirkung erhalten wird. Bindemittel, die bei niedrigeren Temperaturen um 100°C wirksam sind, sind bspw. thermoplastische Kunststoffpulver, wie HDPE, EVAc, PA. Falls eine Bindemittelwirkung unter 100 °C erwünscht ist, können bei Temperaturen unter 100 °C wirksamwerdende Schmelzkleber oder Haftkleber, bspw. in Form von Dispersionen eingesetzt werden, wobei letztere gleichzeitig als Entstaubungsmittel wirken. Es können auch übliche Entstaubungsmittel, wie Mineralöl in Mengen von bis zu 5 Gew.-% Anwendung finden.

Bindemittel für den mittleren Temperaturbereich sind vorzugsweise Borax, Zinkborat, Calciumborat und Ammoniumpentaborat und dergl. Bindemittel für höhere Temperaturbereiche sind geeignete Gläser in körniger oder pulverförmiger Form, wie insbesondere E-Glas, das einen Erweichungsbereich zwischen 700°C und 800°C besitzt. Vorzugsweise ist die Bindemittelmischung so abgestimmt, daß das Brandschutzmaterial auch nach einem Brand, wenn es wieder erkaltet, in gebundener Form vorliegt, insbesondere in einer verbackenen oder versinterten Form. Dadurch kann erreicht werden, daß der erzielte Brandschutz, bspw. ein mit Brandschutzsäcken ausgefüllter Mauerdurchbruch, Löscharbeiten weitgehend standhält und auch bei einem Wiederaufflakern des Feuers bei Wiedererhitzung seine Brandschutzeigenschaften weitgehend behält.

Dabei hat es sich beim erfindungsgemäBen Brandschutzmaterial mit Vorteil gezeigt, daß die Brandschutzeigenschaften nicht nur bei steigender Temperatur aufrechterhalten werden, sondern auch über einen langen Zeitraum bei erhöhter Temperatur. Dies ist darauf zurückzuführen, daß das Temperaturniveau im Brandfalle von außen nach innen aufgrund der hohen Wärmeisolation nur langsam ansteigt, so daß im Inneren der Mischung die Temperatur erst allmählich auf ein Niveau ansteigt, daß die bei ca. 200°C wirksamen Quellmittel anspringen läßt, während in den dem Brand zugewandten Schichten bereits schon Bindemittel und Blähmittel wirksam sind, die auf einer wesentlich höheren Temperaturstufe arbeiten. Dieses sogenannte Zonenschmelzen mit zeitlicher Verzögerung von außen nach innen, hält die Brandschutzwirkung der Mischung auch bei starken Temperaturschwankungen aufrecht, weil im Inneren der Mischung stets noch natives Material vorhanden ist.

Das erfindungsgemäße Brandschutzmaterial kann auch noch weitere übliche Bestandteile enthalten, wie bspw. wasserabspaltende Mittel, insbesondere Aluminiumoxydhyrate und dergl. Wie bereits erwähnt, kann das Brandschutzmaterial in loser Form eingesetzt, bspw. in unregelmäßige Hohlräume geschüttet werden. In der Regel wird es abgepackt in flexiblen Beuteln oder Säcken eingesetzt, wie dies an sich bekannt ist. Die Beutel bestehen vorzugsweise aus dichtgewobenem Glasfasergewebe. Besondere Beschichtungen sind dann nicht erforderlich. Dabei sind die Glasfasern mit Vorteil so dick gewählt, daB die Gefahr von kanzerogenen Eigenschaften nicht besteht.

Ein besonders bevorzugtes Brandschutzmaterial enthält 20 bis 50 Gew.-%, insbesondere 25 bis 45 Gew.-% wärmeisolierende Füllstoffe, insbesondere Leichtfüllstoffe, 20 bi 60 Gew.-%, insbesondere 25 bis 55 Gew.-% Quellmittel, 10 bis 25 Gew.-%, insbesondere 10 bis 20 Gew.-% Bindemittel, 5 bis 20 Gew.-%, insbesondere 5 bis 15 Gew.-% flexibel nachgiebige Bestandteile, sowie ggf. 1 bis 5, insbesondere 2 bis 3 Gew. % Entstaubungsmittel, sowie ggf. weitere übliche Zusätze. Es können Quellmittel zumindest nach der Quellung auch wärmeisolierende Eigenschaften besitzen. Weiterhin können Bindemittel auch Quellmitteleigenschaften aufweisen, z.B. wenn sie sich unter Aufschäumen zersetzen.

Weitere Merkmale der Erfindung ergeben sich aus der nachfolgenden Beschreibung von bevorzugten Ausführungsformen anhand von Beispielen in Verbindung mit den Unteransprüchen:

### Beispiel 1

Ein Schlauchbeutel aus Glasfasergewebe mit 25 cm Breite und 30 cm Länge, ist mit einer Mischung aus 45 Gew.-% expandiertem Perlit (Körnung 0-6 mm), 20 Gew.-% nativem Perlit, 7 Gew.-% PUR-Schaumflocken (Körnung 2 - 7 mm), 3 Gew.-% gemahlenem PE-Schaum (Körnung 1 - 4 mm), 5 Gew.-% Melaminformaldehydharz, 4 Gew.-% Blähgraphit, 2 Gew.-% Polyamid, 6 Gew.-% Calciumborat, 5 Gew.-% E-Glaspulver und 3 Gew.-% Silikonöl nur so weit gefüllt, daß er noch gut mit der Hand formbar ist, und mehrere gefüllte Beutel, ohne Gefahr des Umfallens, flach übereinander stapelbar sind. Bei der Herstellung des Füllmaterials waren die Mischzeiten kurz. Beim Abfüllen in Säcke war praktisch keine Entmischungstendenz sichtbar.

Beim Einbau der gefüllten Schlauchbeutel in eine Kabelabschottung zeigte sich eine deutlich verbesserte Verdichtungs- und Einbauwilligkeit der Beutel - das Ausfüllen vorhandener Zwickel war relativ leicht möglich. Ein Brandversuch nach DIN 4102, Teil 9 wurde nach 110 Minuten abgebrochen, weil auf der Kaltseite noch an keiner Stelle die zulässigen Temperaturen von 180°C über Ausgangstemperatur erreicht wurden. Zwischen den Kabeln wurde nur in den ersten Minuten sehr schwacher Rauchdurchtritt beobachtet, Rauchfahnen aus den Beuteln waren nicht sichtbar.

Beim einseitigen Erhitzen des Beutels auf über 100 °C erweichen zunächst die Niedertemperatur-Bindemittel Polyamid und PE-Schaum. Bereits bei Temperaturen unter 200 °C beginnt die Expansion des Beutelinhalts. Bei weiterer Temperaturerhöhung werden nacheinander die ebenfalls als Bindemittel wirkenden Substanzen Calciumborat und E-Glaspulver, und auch in Abhängigkeit von der Temperatur, die als Quellmittel wirkenden Substanzen Blähgraphit und Perlit aktiv.

Es bildet sich hierdurch eine in jeder Temperaturzone quellende und verklebte, und damit nicht rieselfähige Masse, mit welcher Wand und Deckendurchbrüche verschlossen werden können.

### Beispiel 2

Ein Schlauchbeutel mit 25 cm Breite und 30 cm Länge, ist mit einer Mischung aus 20 Gew.-% Blähtongranulat (Körnung 0-8 mm), 10 Gew.-% Lavagrus (Körnung 0-4 mm), 12,5 Gew.-% expandiertem Perlit, 20 Gew.-% Cellulosefasergranulat (Körnung 3-7 mm), 3 Gew.-% Ethylen-Vinylacetat-Pulver, 5 Gew.-% Ammonium-pentaborat, 3 Gew.-% Ammoniumpolyphosphat, 7.5 Gew.-% E-Glaspulver, 7 Gew.-% Melaminformaldehydharz, 3 Gew.-% Bläh-graphit, 8 Gew.-% nativem Perlit und 1 Gew.-% Mineralöl in bereits genannter Art und Weise gefüllt. Auch hier ließ sich die Herstellung der Mischung relativ rasch und die Befüllung von Kartons ohne sichtbare Entmischungsneigung bewerkstelligen.

Beim Einbau der gefüllten Schlauchbeutel in eine Kabelabschottung zeigte sich eine deutlich verbesserte Verdichtungs- und Einbauwilligkeit der Beutel - das Ausfüllen von Zwickeln war relativ leicht möglich.

Trotz des hohen Anteils an brennbarem Material wurde überraschenderweise erst in der 114. Minute die zulässige Temperaturhöhe auf der Kaltseite der Kabelabschottung erreicht. Rauchgasdurchtritte zwischen den Kabeln bzw. Rauchfahnen aus den Beuteln wurden nicht beobachtet.

Beim Erhitzen des Beutels werden die wärmeisolierenden Leichtfüllstoffe in den verschiedenen Temperaturzonen nacheinander von den als Bindemittel wirkenden Stoffen Ethylen-Vinylacetat-Pulver, Ammoniumpentaborat, Ammoniumpolyphosphat und E-Glaspulver zu einem Block verklebt. Gleichzeitig nimmt das Volumen der verblockten wärmeisolierenden Masse in Abhängigkeit von der Temperatur stetig zu.

Bei Temperaturen über 900 °C beginnt die Mischung schließlich zu einem starren Körper zu sintern, dessen Volumen größer ist als das Ausgangsvolumen.

### Beispiel 3

Ein Schlauchbeutel aus Glasfasergewebe mit 25 cm Breite und 35 cm Länge, ist mit einer Mischung aus 25 Gew.-% expandiertem Perlit (Körnung 0-6 mm), 45 Gew.-% nativem Perlit, 3 Gew.-% Blähgraphit, 5 Gew.-% Vermiculit, 2,5 Gew.-% HDPE-Pulver, 5 Gew.-% Zinkborat, 5 Gew.-% Ammoniumpolyphosphat, 6,5 Gew.-% PUR-Schaumflocken (Körnung 2-7 mm) und 3 Gew.-% einer 50 %igen Polyvinylacetat/Ethylen-Dispersion, in bereits genannter Weise gefüllt. Zur Herstellung der Mischung gilt sinngemäß das bei Beispiel 1 gesagte. Bei der Herstellung des Füllmaterials konnten die Mischzeiten deutlich verkürzt werden, beim Abfüllen der Säcke war praktisch keine Entmischungstendenz sichtbar.

Beim Einbau der gefüllten Schlauchbeutel in eine Kabelabschottung zeigte sich eine deutlich verbesserte Verdichtungs- und Einbauwilligkeit der Beutel - das Ausfüllen der Zwickel war relativ leicht möglich.

Der Brandversuch ergab keine Rauchdurchtritte in den Zwischenräumen zwischen den Kabeln und nur während der ersten Minuten leichte Rauchfahnen auf der Beutelkaltseite. Die zulässige Rückseitentemperatur nach DIN 4102, Teil 9 von 180°C über Ausgangstemperatur wurde in der 110. Minute erreicht.

Beim Erhitzen des Beutels werden die wärmeisolierenden Leichtfüllstoffe in den verschiedenen Temperaturzonen nacheinander von den als Bindemittel wirkenden Stoffen PVAc/Ethylen, HDPE-Pulver, Zinkborat, Ammoniumpolyphosphat zu einem Block verklebt. Die PUR-Schaumflocken dienen als Abdichtmaterial zwischen den starren, isolierenden Körnern des Leichtfüllstoffs. Das Volumen der verklebten wärmeisolierenden Masse nimmt in Abhängigkeit von der Temperatur durch Zusatz der als Quellmittel wirkenden Komponenten Blähgraphit, Vermiculit und Perlit stetig zu.

Allen Beispielen ist gemein, daß ein thermisch isolierendes, an anorganischen Fasern freies Material derart mit einer Reihe von Quell- und Bindemitteln versetzt wird, daß sich sowohl ein permanentes Quellen, als auch ein Verkleben durch in verschiedenen Temperaturzonen aktiv werdende Stoffe und schließlich in hohem Temperaturbereich ein Erhärten ergibt. Die organischen Schäume aus PUR, PE, PP sowie das Cellulosefasergranulat dienen dazu, dem Material eine gewisse Verdichtungswilligkeit beim Einbau zu geben, woraus eine bessere Rauchgasdichtigkeit resultiert.

### Beispiel 4

Ein Schlauchbeutel aus Glasfasergewebe mit 25 cm Breite und 35 cm Länge ist mit einer Mischung aus 24 Gew.-% expandiertem Perlit (Körnung 0 - 6 mm), 25 Gew.-% nativem Perlit, 2,5 Gew.-% Blähgraphit, 2,5 Gew.-% Vermiculit, 5,5 Gew.-% Ammoniumpolyphosphat, 6 Gew.-% Calciumborat, 2 Gew.-% Zinkbo-rat, 6 Gew.-% PVAc/E.-Dispersion, 1,5 Gew.-% PA-Pulver und 25 Gew.-% geschnittenen PE-Schaum (Körnung 2 - 8 mm) in bereits genannter Art und Weise gefüllt. Zur Herstellung der Mischung bezüglich der Entmischungsneigung wie auch der Einbauwilligkeit in das Schott gilt das bei Beispiel 3 Gesagte.

Der Brandversuch durchgeführt in einer 400 x 300 mm großen Offnung mit 15 PVC-Kabeln (NYM 3x1,5 mm) auf einer Leitertrasse ergab trotz des hohen Anteils an brennbaren Inhaltsstoffen eine Temperaturerhöhung von 180 K auf der Kaltseite erst nach 102 Minuten. Die in der Bundesrepublik Deutschland für feuerbeständige Decken und Wände geforderte Feuerwiderstandsdauern sind hingegen nur 90 min., dies bedeutet, daß eine Abschottung dieser Art die Anforderungen des baulichen Brandschutzes mit Reserve erfüllt. Die Beutel bewirkten wiederum eine sehr gute Abdichtung gegen Rauchgasdurchtritt zwischen Beuteln und Kabeln bzw. durch den Beutelinhalt hindurch (keine Rauchfahnen sichtbar).

Die Mischung verklebt bereits bei Temperaturen von 90°C durch die als Bindemittel wirkenden Stoffe PA-Pulver, PVAc/E-Dispersion und PE-Schaum. Bei 180 - 200°C beginnt der Bläh-graphit das Volumen der verklebten Masse zu erhöhen. Bei weiterer Temperaturerhöhung werden die als Hochtemperaturbindemittel wirkenden Stoffe Zinkborat, Calciumborat und Ammoniumpolyphosphat aktiviert. Die Quellmittel Vermiculit und Perlit führen bei 400 - 800 bzw. 1000 - 1200°C zu ebenfalls temperaturabgestufter Expansion der Mischung.

Es können sich zu keiner Zeit Fugen durch abbrennbare Kabelmantel bilden, weiterhin wird durch den Einsatz des elastisch/komprimierbaren PE-Schaums die Bildung von Kanälen, durch die Rauchgase strömen können, wirksam verhindert.

## Patentansprüche

1. Brandschutzmaterial in loser Mischung, insbesondere in einem verschlossenen, flexiblen Beutel, enthaltend
a. mindestens ein bei Temperaturen bis 1100°C wärmebeständiges, wärmeisolierendes Material,
b. mindestens ein bei erhöhten Temperaturen wirksames Quellmittel,
c. mindestens ein bei erhöhten Temperaturen wirksames Bindemittel,
dadurch gekennzeichnet, daß die Mischung frei von anorganischen Fasern ist und mindestens einen flexibel nachgiebigen Bestandteil enthält.

2. Brandschutzmaterial nach Anspruch 1, dadurch gekennzeichnet, daß der flexibel nachgiebige Bestandteil in Teilchenform einer Teilchengröße von 0,5mm bis 10mm insbesondere 2mm bis 8mm vorliegt.

3. Brandschutzmaterial nach Anspruch 1 oder 2, dadurch gekennzeichnet, daß der flexibel nachgiebige Bestandteil komprimierbar ist.

4. Brandschutzmaterial nach einem der vvrhergehenden Ansprüche, dadurch gekennzeichnet, daß der flexibel nachgiebige Bestandteil aus organischem Material besteht.

5. Brandschutzmaterial nach einem der vorhergehenden Ansprüche, dadurch gekennzeichnet, daß der flexibel nachgiebige Bestandteil eine unregelmäßige, vorzugsweise rauhe Oberfläche besitzt.

6. Brandschutzmaterial nach einem der vorhergehenden Ansprüche, dadurch gekennzeichnet, daß der flexibel nachgiebige Bestandteil in körniger oder Granulatform vorliegt.

7. Brandschutzmaterial nach einem der vorhergehenden Ansprüche, dadurch gekennzeichnet, daß der flexibel nachgiebige Bestandteil ein Schaumstoffgranulat ist.

8. Brandschutzmaterial nach einem der vorhergehenden Ansprüche, dadurch gekennzeichnet, daß der flexibel nachgiebige Bestandteil porös ist.

9. Brandschutzmaterial nach einem der vorhergehenden Ansprüche, dadurch gekennzeichnet, daß der flexibel nachgiebige Bestandteil ein Faserkonglomerat ist.

10. Brandschutzmaterial nach einem der vorhergehenden Ansprüche, dadurch gekennzeichnet, daB der flexibel nachgiebige Bestandteil in der Mischung in Mengen von 1 bis 30 Gew.-% vorzugsweise 2 bis 15 Gew.-% enthalten ist.

11. Brandschutzmaterial nach einem der vorhergehenden Ansprüche, dadurch gekennzeichnet, daß es eine Quellmittelmischung enthält, die so eingestellt ist, daß sie bei Temperaturen ab ca. 150°C, insbesondere ab ca. 200°C im wesentlichen stetig an Volumen zunimmt.

12. Brandschutzmaterial nach einem der vorhergehenden Ansprüche, dadurch gekennzeichent, daß es eine Bindemittelmischung enthält, die so eingestellt ist, daß die Bindemittel ab ca. 100°C bis mindestens 900°C ihre Bindemittelwirkung nacheinander entfalten.

## Claims

1. A fireproofing material in the form of a loose mixture, more particularly in a sealed flexible bag, containing
a. at least one heat-insulating material which is heat-resistant at temperatures of up to 1100°C,
b. at least one swelling agent active at elevated temperatures,
c. at least one binder active at elevated temperatures,
characterized in that the mixture is free from inorganic fibers and contains at least one flexibly compliant constituent.

2. A fireproofing material as claimed in claim 1, characterized in that the flexibly compliant constituent is present in particle form with a particle size of 0.5 mm to 10 mm and, more particularly, 2 mm to 8 mm.

3. A fireproofing material as claimed in claim 1 or 2, characterized in that the flexibly compliant constituent is compressible.

4. A fireproofing material as claimed in any of the preceding claims, characterized in that the flexibly compliant constituent consists of organic material.

5. A fireproofing material as claimed in any of the preceding claims, characterized in that the flexibly compliant constituent has an uneven, preferably rough surface.

6. A fireproofing material as claimed in any of the preceding claims, characterized in that the flexibly compliant constituent is present in granular form.

7. A fireproofing material as claimed in any of the preceding claims, characterized in that the flexibly compliant constituent is a granular foam.

8. A fireproofing material as claimed in any of the preceding claims, characterized in that the flexibly compliant constituent is porous.

9. A fireproofing material as claimed in any of the preceding claims, characterized in that the flexibly compliant constituent is a fiber conglomerate.

10. A fireproofing material as claimed in any of the preceding claims, characterized in that the flexibly compliant constituent is present in the mixture in quantities of 1 to 30% by weight and preferably 2 to 15% by weight.

11. A fireproofing material as claimed in any of the preceding claims, characterized in that it contains a mixture of swelling agents formulated in such a way that the mixture increases in volume substantially constantly at temperatures of around 150°C and, more particularly, at temperatures of around 200°C.

12. A fireproofing material as claimed in any of the preceding claims, characterized in that it contains a mixture of binders formulated in such a way that the binders successively develop their binding effect at about 100°C to at least 900°C.

## Revendications

1. Matériau ignifuge en mélange en vrac, en particulier dans un sachet flexible et fermé, contenant
a) au moins un matériau calorifuge et résistant à la chaleur jusqu'à 1100°C,
b) au moins un agent gonflant agissant à des températures élevées,
c) au moins un liant agissant à des températures élevées,
caractérisé en ce que
le mélange est libre de fibres inorganiques et qu'il contient au moins un constituant flexible et souple.

2. Matériau ignifuge selon la revendication 1,
caractérisé en ce que
le constituant flexible et souple est présent sous forme de particules dont la taille est comprise entre 0,5 mm et 10 mm, en particulier entre 2 mm et 8 mm.

3. Matériau ignifuge selon la revendication 1 ou 2,
caractérisé en ce que
le constituant flexible et souple est compressible.

4. Matériau ignifuge selon une des revendications précédentes,
caractérisé en ce que
le constituant flexible et souple contient une matière organique.

5. Matériau ignifuge selon une des revendications précédentes,
caractérisé en ce que
le constituant flexible et souple possède une surface irrégulière, de préférence rugueuse.

6. Matériau ignifuge selon une des revendications précédentes,
caractérisé en ce que
le constituant flexible et souple est présent sous forme granuleuse ou sous forme de granulat.

7. Matériau ignifuge selon une des revendications précédentes,
caractérisé en ce que
le constituant flexible et souple est un granulat de mousse.

8. Matériau ignifuge selon une des revendications précédentes,
caractérisé en ce que
le constituant flexible et souple est poreux.

9. Matériau ignifuge selon une des revendication précédentes,
caractérisé en ce que
le constituant flexible et souple est un conglomérat fibreux.

10. Matériau ignifuge selon une des revendication précédentes,
caractérisé en ce que
le constituant flexible et souple est contenu dans le mélange en une quantité comprise entre 1 et 30 % en poids, de préférence entre 2 et 15 % en poids.

11. Matériau ignifuge selon une des revendications précédentes,
caractérisé en ce qu'
il contient un mélange d'agents gonflants qui est accordée de telle façon que son volume augmente de façon essentiellement continue à partir de températures d'environ 150°C, en particulier à partir d'environ 200°C.

12. Matériau ignifuge selon une des revendications précédentes,
caractérisé en ce qu'
il contient un mélange de liants réglé de façon à ce que leur effet liant est déployé successivement à partir d'environ 100°C jusqu'à au moins 900°C.
